# EUROPEAN PATENT APPLICATION

(11) **EP 2 506 351 A2**
(43) Date of publication of application: **03.10.2012**
(21) Application number: 12161922.5
(22) Date of filing: 28.03.2012
(51) Int. Cl.: H01M 4/86, H01M 4/90, H01M 8/12

(54) **Material for solid oxide fuel cell, cathode including the material, and solid oxide fuel cell including the same**

(30) Priority: 31.03.2011 KR 20110029847
(71) Applicant: Samsung Electronics Co., Ltd., Suwon-si, Gyeonggi-do, 443-742 (KR); Samsung Electro-Mechanics Co., Ltd, Suwon-si, Gyeonggi-do (KR)
(72) Inventor: Seo, Soo-yeon, 449-712 Gyeonggi-do (KR); Kwak, Chan, 449-712 Gyeonggi-do (KR); Park, Hee-jung, 449-712 Gyeonggi-do (KR)
(74) Representative: Zijlstra, Robert Wiebo Johan

(57) **Abstract**

A material for a solid oxide fuel cell including a compound of Chemical Formula 1: Chemical Formula 1

BaₐSr_{b}CoₓFe_{y}M_{1-x-y}O_{3-δ}

wherein M represents at least one of a transition metal element or a lanthanide element, a and the b are in a range of 0.4 ≤ a ≤ 0.6 and 0.4 ≤ b ≤ 0.6, respectively, x and y are in a range of 0.6 ≤ x ≤ 0.9, 0.1 ≤ y ≤ 0.4 and x+y < 1, respectively, and δ is selected so that the compound of Chemical Formula 1 is electrically neutral.

## Description

### BACKGROUND

The present disclosure relates to a material for a solid oxide fuel cell, a cathode including the material, and a solid oxide fuel cell including the material.

A solid oxide fuel cell ("SOFC") is a high-efficiency and environmentally friendly electrochemical power generation technology that directly converts the chemical energy of a fuel gas into electrical energy. When compared to other types of fuel cells, the SOFC has many advantages such as relatively inexpensive materials, a relatively high tolerance for fuel impurities, hybrid power generation capability, and high efficiency. Also, a hydrocarbon-based fuel may be directly used without reforming the fuel into hydrogen, simplifying the cost and complexity of a SOFC fuel cell system. The SOFC includes an anode where a fuel such as hydrogen or a hydrocarbon is oxidized, a cathode where oxygen gas is reduced to oxygen ions (O²⁻), and a ceramic solid electrolyte which conducts the oxygen ions.

Since a typical SOFC is operated at a high temperature, e.g., a temperature ranging from about 800 °C to about 1000 °C, it has limitations in that high-temperature alloys or expensive ceramic materials, which can withstand such high temperatures, are used, and the SOFC has a long initial system startup time and reduced durability, limiting prolonged operation. A further limitation associated with high temperatures is an overall cost increase, which is a significant obstacle to commercialization.

As a result, much research has been conducted in order to decrease the operating temperature of the SOFC to about 800°C or less. However, reduction of the operating temperature results in a rapid increase in the electrical resistance of commercially available SOFC materials, which results in reduced power density of the SOFC. Thus, there have been many efforts to decrease the electrical resistance of SOFC cathode materials to permit a decrease in an operating temperature of the SOFC. Still, there remains a need for improved SOFC materials.

### SUMMARY OF THE INVENTION

Provided is a material for a solid oxide fuel cell including a perovskite-type oxide doped with a transition metal element and/or a lanthanide element.

Provided is a cathode for a solid oxide fuel cell including the material.

Provided is a solid oxide fuel cell including the material.

Additional aspects will be set forth in part in the description which follows and, in part, will be apparent from the description.

According to an aspect, disclosed is a material for a solid oxide fuel cell including a compound of Chemical Formula 1:

Chemical Formula 1 BaₐSr_{b}COₓFe_{y}M_{1-x-y}O_{3-δ}

wherein M represents at least one of a transition metal element or a lanthanide element, a and b are in a range of 0.4 ≤ a ≤ 0.6 and 0.4 ≤ b ≤ 0.6, respectively, x and y are in a range of 0.6 ≤ x ≤ 0.9, 0.1 ≤ y ≤ 0.4 and x+y < 1, respectively, and δ is selected so that the compound of Chemical Formula 1 is electrically neutral.

In an embodiment, δ is 0.1 ≤ δ ≤ 0.4.

According to another aspect, disclosed is a cathode for a solid oxide fuel cell, the cathode including the material for a solid oxide fuel cell provided above.

The cathode for a solid oxide fuel cell may have a multilayer structure including the material for a solid oxide fuel cell and an additional layer, and the additional layer may include a lanthanide metal oxide having a perovskite-type crystal structure.

According to another aspect, a solid oxide fuel cell including the cathode disclosed above, an anode, and an electrolyte disposed between the cathode and the anode is provided.

The solid oxide fuel cell may further include a first functional layer which is disposed between the cathode and the electrolyte and which is effective to prevent or suppress a reaction between the cathode and the electrolyte.

The first functional layer may include at least one of gadolinium-doped ceria ("GDC"), samarium-doped ceria ("SDC"), or yttrium-doped ceria ("YDC").

According to another aspect, a solid oxide fuel cell including a cathode, an anode, an electrolyte disposed between the cathode and the anode, and a second functional layer disposed between the cathode and the electrolyte and including the material for a solid oxide fuel cell as disclosed above is provided.

Also disclosed is material for a solid oxide fuel cell including, Ba, Sr, Co, Fe, M, and O, wherein M represents at least one of a transition metal element or a lanthanide element, a mole ratio a of Ba is 0.4 ≤ a ≤ 0.6, a mole ratio b of Sr is 0.4 ≤ b ≤ 0.6, a mole ratio x of Co is 0.6 ≤ x ≤ 0.9, a mole ratio y of Fe is 0.1 ≤ y ≤ 0.4, a mole ratio of M is equal to 1-x-y, wherein M is at least one of a metal of Groups 3 to 12 or a lanthanide element, and a mole ratio δ of O is selected so that the material is electrically neutral, wherein the mole ratios are based on a total moles of the material.

### BRIEF DESCRIPTION OF THE DRAWINGS

These and/or other aspects will become apparent and more readily appreciated from the following description of the embodiments, taken in conjunction with the accompanying drawings in which:
FIG. 1 is a cross-sectional view illustrating an embodiment of a half cell including a material layer;
FIG. 2 is a cross-sectional view illustrating an embodiment of a half cell including a material layer;
FIGS. 3A and 3B are scanning electron micrographs ("SEM"s) of a cathode layer material obtained from Example 1; and
FIG. 4 shows a cross-sectional SEM of a test cell obtained from Example 1.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. "Or" means "and/or".

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A transition metal element means an element of Groups 3 to 12 of the Periodic Table of the Elements.

Hereinafter, a material for a solid oxide fuel cell according to an embodiment will be disclosed in further detail.

In the present specification, a "material for solid oxide fuel cell" may be a "cathode material for a solid oxide fuel cell" and/or a "functional layer material for a solid oxide fuel cell", in which the "functional layer material for a solid oxide fuel cell" may be in the form of a layer that may be disposed between an electrolyte layer and a cathode to substantially prevent or effectively suppress a reaction therebetween.

A material for a solid oxide fuel cell according to an embodiment may include a compound of Chemical Formula 1:

Chemical Formula 1 BaₐSr_{b}CoₓFe_{y}B_{1-x-y}O_{3-δ}

wherein M represents at least one of a transition metal element or a lanthanide element, a and b may be in a range of 0.4 ≤ a ≤ 0.6 and 0.4 ≤ b ≤ 0.6, respectively, x and y may be in a range of 0.6 ≤ x ≤ 0.9, 0.1 ≤ y ≤ 0.4 and x+y < 1, respectively, and δ is selected so that the compound of Chemical Formula 1 is electrically neutral.

In an embodiment, a may be 0.45 ≤ a ≤ 0.55, specifically 0.48 ≤ a ≤ 0.52, and b may be 0.45 ≤ b ≤ 0.55, specifically 0.48 ≤ b ≤ 0.52.

In an embodiment, x may be 0.65 ≤ x ≤ 0.85, specifically 0.7 ≤ x ≤ 0.8, and y may be 0.15 ≤ y ≤ 0.35, specifically 0.2 ≤ y ≤ 0.3. In a specific embodiment, x and y are 0.75 ≤ x ≤ 0.85 and 0.1 ≤ y ≤ 0.15, respectively.

The variable δ can represent a content of oxygen vacancies, and is selected so that the material for a solid oxide fuel cell represented by the Chemical Formula 1 is electrically neutral. For example, δ may be in a range of about 0.1 to about 0.4, specifically 0.2 to 0.3. In an embodiment, δ is 0.1 ≤ δ ≤ 0.4, specifically 0.2 ≤ δ ≤ 0.3.

According to an embodiment, x and y may be in a range of x+y < 1, for example 0.7 ≤ x+y ≤ 0.95, specifically 0.75 ≤ x+y ≤ 0.9, more specifically 0.8 ≤ x+y ≤ 0.85.

According to an embodiment , a and b may be in a range of 0.9 ≤ a+b ≤ 1, specifically 0.92 ≤ a+b ≤ 0.98, more specifically 0.94 ≤ a+b ≤ 0.96.

The material for a solid oxide fuel cell can be represented by the Chemical Formula Ba_{0.5}Sr_{0.5}Co_{0.8}Fe_{0.2}O_{3-δ} ("BSCF"), which has a perovskite-type crystal structure, wherein the BSCF is doped with a transition metal element or a lanthanide element, or a combination thereof. While not wanting to be bound by theory, it is understood that the doping improves the stability of the BSCF by improving thermal expansion properties of the BSCF.

BSCF is a perovskite-type low-temperature cathode material having excellent properties. BSCF inherently has a high concentration of oxygen vacancies and provides high oxygen mobility. However, BSCF exhibits a high thermal expansion coefficient ("TEC") of about 19 × 10⁻⁶ K⁻¹ (in air, 50-900 °C). While not wanting to be bound by theory, it is understood that the high thermal expansion coefficient of BSCF may cause an interlayer mismatch due to the mismatch of the thermal expansion coefficients between various layers used in the cathode or cause a reduction in stability over prolonged operation.

According to an embodiment, the BSCF is doped with a transition metal or a lanthanide element to improve or reduce its thermal expansion coefficient and provide desirable low-temperature resistance characteristics, e.g., high ionic conductivity at low temperatures, which is an inherent advantage of BSCF. Therefore, since the stability of a cell can be improved by minimizing the interlayer thermal mismatch of the cell employing the BSCF as a cathode material, it is possible to increase the durability of the cell.

According to an embodiment, the material for a solid oxide fuel cell of Chemical Formula 1 may have a composition of Chemical Formula 2 or Chemical Formula 3:

Chemical Formula 2 Ba_{0.5}Sr_{0.5}CoₓFe_{y}M_{1-x-y}O₃₋δ

wherein M represents at least one of a transition metal element or a lanthanide element, x and y are in a range of 0.75 ≤ x ≤ 0.85, 0.1 ≤ y ≤ 0.15 and x+y < 1, respectively, and ≤ is selected so that the compound of Chemical Formula 2 electrically neutral. In an embodiment, x may be about 0.8 and y may be about 0.1.

Chemical Formula 3 Ba_{0.5}Sr_{0.5}Co_{0.8}Fe_{0.1}M_{0.1}O_{3-δ}

wherein M represents at least one of a transition metal element or a lanthanide element, and δ is selected so that the compound of Chemical Formula 3 electrically neutral.

The transition metal element included in the material for a solid oxide fuel cell of Chemical Formulas 1 to 3 may be a Group 3 to Group 12 element, wherein the lanthanide elements are excluded from the transition metal elements as defined in the present specification. Examples of the transition metal element may include at least one of manganese, zinc, nickel, titanium, niobium, or copper, and they are not limited thereto.

The lanthanide element included in the material for a solid oxide fuel cell of Chemical Formulas 1 to 3 includes an element of atomic numbers 57 to 70. For example, the lanthanide element may include at least one of holmium, ytterbium, erbium, or thulium, and they are not limited thereto.

In another embodiment, a material for a solid oxide fuel cell comprises Ba, Sr, Co, Fe, M, and O, wherein a mole ratio a of Ba is 0.4 ≤ a ≤ 0.6, a mole ratio b of Sr is 0.4 ≤ b ≤ 0.6, a mole ratio x of Co is 0.6 ≤ x ≤ 0.9, a mole ratio y of Fe is 0.1 ≤ y ≤ 0.4, a mole ratio of M is equal to 1-x-y, wherein M is at least one of a metal of Groups 3 to 12 or a lanthanide element, and a mole ratio δ of O is selected so that the material is electrically neutral, wherein the mole ratios are based on the total moles of the material. The material may be a compound of Chemical Formula 4:

Ba_{0.5}Sr_{0.5}Co_{0.8}Fe_{0.1}M_{1-(x+y)}O_{3-δ}

wherein M represents at least one of a transition metal element or a lanthanide element, and (x+y) is in a range of 0.7 ≤ x+y ≤ 0.95.

The material for a solid oxide fuel cell may have an average particle diameter (e.g., an average largest particle diameter) of about 100 nm (nanometers) or less, e.g., an average particle diameter of about 5 nm to about 95 nm, specifically about 10 nm to about 85 nm, more specifically about 50 nm to about 60 nm. A material having the foregoing particle diameter may have an increased concentration of active sites for an oxygen reduction.

In an embodiment, the material for a solid oxide fuel cell may have a thermal expansion coefficient lower than or equal to about 19.5X10⁻⁶ K⁻¹, specifically about 19.0×10⁻⁶ K⁻¹, more specifically about 18×10⁻⁶ K⁻¹ at a temperature between about 50°C and about 800°C.ln an embodiment, the material for a solid oxide fuel cell may have a thermal expansion coefficient lower than or equal to about 19.5×10⁻⁶ K⁻¹, specifically about 19.0×10⁻⁶ K⁻¹, more specifically about 18×10⁻⁶ K⁻¹ at a temperature between about 50°C and about 800°C.

Hereinafter, a method of manufacturing a material for a solid oxide fuel cell will be disclosed in further detail.

In an embodiment, the method of manufacturing the material for a solid oxide fuel cell includes wet mixing a metal precursor of each metal in an amount corresponding to the composition of Chemical Formula 1 and in a solvent, performing a first heat treatment on the wet mixture to obtain a gelated material, and performing a second heat treatment on the gelated material.

The metal precursor may be a nitride, oxide, or halide of each respective metal component of the cathode material.

Water may be used as the solvent in the wet mixing, and the solvent it is not limited thereto.

In the wet mixing, a precipitation aid may be further included, and examples thereof may include at least one of urea, polyvinyl alcohol ("PVA"), polyvinylpyrrolidone ("PVP"), or cellulose. A combination of urea and polyvinyl alcohol or a combination of urea and polyvinylpyrrolidone are specifically mentioned. The urea and polyvinyl alcohol, or the urea and polyvinylpyrrolidone may be used in the same or similar weight, respectively.

The wet mixing process may be performed at a temperature of about 100 °C to about 200 °C, specifically about 110 °C to about 180 °C, more specifically 120 °C to about 170 °C, and may be performed for a predetermined time, e.g., about 1 minute to about 100 minutes, in order to sufficiently mix the components.

The first heat treatment may be performed at a temperature of about 150 °C to about 500 °C, specifically about 200 °C to about 450 °C, more specifically about 250 °C to about 400 °C, for about 1 hour to about 10 hours, specifically 2 hours to about 9 hours, more specifically 3 hours to about 8 hours to gelate the mixed solution.

The second heat treatment may comprise firing the gelated material in a crucible and may be performed at a temperature of about 800 °C to about 1300 °C, specifically about 850 °C to about 1250 °C, more specifically about 900 °C to about 1200 °C for about 1 hour to about 10 hours, specifically 2 hours to about 9 hours, more specifically 3 hours to about 8 hours to obtain a powdered product. If desired, the product may be obtained in the form of a fine powder having a selected particle size, e.g., an average largest particle size of about 5 nm to about 1000 nm, specifically about 10 nm to about 500 nm, more specifically about 50 nm to about 300 nm, by grinding.

When the metal precursors as starting materials are heated after being mixed together with the precipitation aid, a complex between the materials may be formed as an intermediate. A cathode material for a solid oxide fuel cell with a desired perovskite structure may be obtained by oxidizing the intermediate in a sintering process at a high temperature. Also, since a commercially available BSCF-based material has highly volatile elements, it is difficult to obtain a uniform particle size using such a BSCF material. However, the inventors have found that it is possible to obtain a uniform cathode material with an average particle diameter of about 100 nm or less by using the disclosed combination of at least one precipitation aid and appropriately selecting a gelation rate and heat treatment rate.

Selecting a microstructure of the electrode, such as the pore size, morphology, and electrode porosity of the cathode layer, can greatly affect the performance of a cathode. When the cathode material obtained according to the foregoing manufacturing processes has a high porosity, a large specific surface area, a small average particle diameter, and a uniform particle size, an increased concentration of the active sites for the oxygen reduction reaction may be provided.

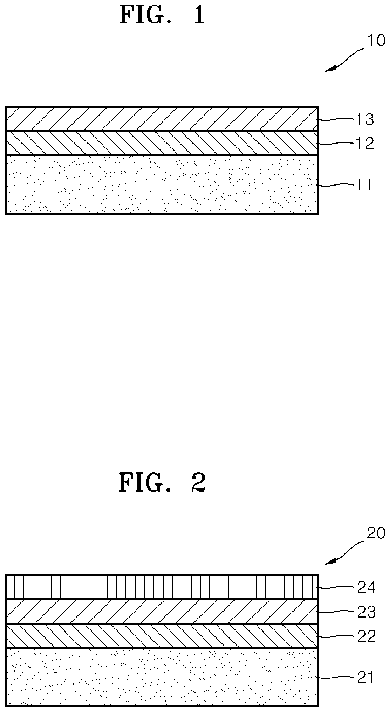

A slurry may be prepared by adding an organic vehicle to the material for a solid oxide fuel cell, wherein the material may be in the form of a fine powder obtained as disclosed above. The slurry may be coated on an electrolyte layer (e.g., electrolyte layer 11 in FIG. 1) or a first functional layer (e.g., first functional layer 12 in FIG. 1) which will be further disclosed below, and then, a third heat treatment may be further included.

The organic vehicle provides improved workability to the slurry, facilitating the formation of a coating by e.g., screen printing or a dipping process. The organic vehicle may include a resin, a solvent, or a combination thereof. The resin may function as a temporary binder in order for the slurry to maintain a layer before the third heat treatment and after the coating of the slurry. The solvent affects a viscosity and/or printability of the slurry. The resin may include at least one of polyvinyl alcohol ("PVA"), polyvinylpyrrolidone ("PVP"), or cellulose. The solvent may include at least one of ethylene glycol or alpha-terpineol.

The third heat treatment may be performed at a temperature of about 800 °C to about 1300 °C, specifically about 850°C to about 1250°C, more specifically about 900°C to about 1200°C for about 1 hour to about 10 hours, specifically 2 hours to about 9 hours, more specifically 3 hours to about 8 hours. When the third heat treatment temperature is in the foregoing temperature range and is performed for the foregoing time, a material having a suitable adhesion with a base (e.g., the electrolyte layer or the first functional layer) as well as not forming a secondary phase may be obtained.

Since a high density may be desirable for the electrolyte layer, a sintering treatment to increase the density may be performed at a high temperature for a long time. Sintering may be performed at 1000 °C to about 1600 °C, specifically about 1450 °C to about 1550 °C , more specifically about 1500°C for about 1 hour to about 20 hours, specifically about 6 hours to about 8 hours, more specifically about 7 hours.

The first functional layer may have a dense structure suitable for functioning as a buffer layer. Since the foregoing forming condition of the first functional layer may plays a significant role to obtain suitable cathode performance, sintering may be performed at a temperature range of 1000 °C to about 1600 °C, specifically about 1350 °C to about 1450 °C, more specifically about 1400°C for about 1 hour to about 20 hours, about 3 hours to about 5 hours, more specifically about 4 hours as a process condition selected to reduce or prevent the interlayer diffusion of elements and minimize the interlayer thermal expansion mismatch. The coating of the slurry for forming the first functional layer may be performed to provide a coating having a thickness of about 1 µm to about 50 µm, specifically about 15 µm to about 25 µm, more specifically about 20 µm.

Hereinafter, a cathode for a solid oxide fuel cell including the cathode material for a fuel cell according to an embodiment and a solid oxide fuel cell including the cathode will be described in further detail with reference to the drawings.

FIG. 1 is a cross-sectional view illustrating a half cell 10 including a cathode material layer 13.

The half cell 10 includes an electrolyte layer 11, a first functional layer 12, and a cathode material layer 13.

The electrolyte layer 11 may include at least one of scandia-stabilized zirconia ("ScSZ"), yttria-stabilized zirconia ("YSZ"), samarium-doped ceria ("SDC"), or gadolinium-doped ceria ("GDC").

The first functional layer 12 is selected to substantially prevent or effectively suppress a reaction between the electrolyte layer 11 and the cathode material layer 13 to substantially prevent or effectively suppress the occurrence of a non-conductive layer (not shown) therebetween. The first functional layer 12 may include at least one of gadolinium-doped ceria ("GDC"), samarium-doped ceria ("SDC"), or yttrium-doped ceria ("YDC").

The cathode material layer 13 may include the material for a solid oxide fuel cell. In this embodiment, the cathode material layer 13 is a cathode.

In an embodiment, the cathode material layer 13 may have a thermal expansion coefficient lower than or equal to about 19.5×10⁻⁶ K⁻¹, specifically about 19.0×10⁻⁶ K⁻¹, more specifically about 18×10⁻⁶ K⁻¹ at a temperature between about 50°C and about 800°C. The first functional layer 12 may have a thermal expansion coefficient higher than or equal to about 10×10⁻⁶ K⁻¹, specifically about 12×10⁻⁶ K⁻¹. A difference in a thermal expansion coefficient between the cathode material layer and the first functional layer may be smaller than about 10×10⁻⁶ K⁻¹, specifically about 8×10⁻⁶ K⁻¹, more specifically about 6×10⁻⁶ K⁻¹.

A solid oxide fuel cell (not shown) with an anode (not shown) in combination with the half cell 10, which has the foregoing configuration, may provide an improved or reduced thermal expansion coefficient and provide a suitable low-temperature resistance of the material for a solid oxide fuel cell, which may be included in the cathode material layer 13. Therefore, it is possible to increase the durability of the fuel cell by minimizing the interlayer thermal mismatch and improve the stability in the forgoing manner.

FIG. 2 is a cross-sectional view illustrating a half cell 20 including a cathode material layer 23 according to another embodiment.

The half cell 20 includes an electrolyte layer 21, a first functional layer 22, a cathode material layer 23, and an additional layer 24. Herein, the cathode material layer 23 and the additional layer 24 together form a cathode. However, the disclosed embodiment is not limited thereto, and a half cell and a solid oxide fuel cell including a cathode having a multilayer structure with various structures, e.g., a cathode having a plurality of layers, is specifically mentioned.

The configuration and function of the electrolyte layer 21, the first functional layer 22, and the cathode material layer 23 may be substantially identical to that of the foregoing electrolyte layer 11, first functional layer 12, and cathode material layer 13, respectively.

The additional layer 24 may include a lanthanide metal oxide having a perovskite-type crystal structure. Also, the lanthanide metal oxide included in the additional layer 24 may be the same as the lanthanide metal oxide included in the cathode material layer 23.

The anode may include a cermet combined with a material for forming the electrolyte layers 11 and 21 and a nickel oxide, where the foregoing may be combined when in form of a powder. Also, the anode may additionally include activated carbon.

According to another embodiment, although not illustrated in the drawings, a solid oxide fuel cell including the foregoing electrolyte layer, a second functional layer including the material for a solid oxide fuel cell, and a cathode is provided. The second functional layer is disposed between the electrolyte layer and the cathode to substantially prevent or effectively suppress a reaction therebetween.

The foregoing solid oxide fuel cell may comprise the material for a solid oxide fuel cell having an improved thermal expansion coefficient as well as maintaining a suitable low-temperature resistance as an electrode material. Therefore, it is possible to operate the foregoing solid oxide fuel cell at a temperature of about 800 °C or less, for example, in a temperature range of about 550 °C to about 750 °C, or about 600 °C to about 750 °C. As a result, the interlayer thermal mismatch of the cell in the solid oxide fuel cell is minimized by improving a thermal expansion coefficient as well as maintaining a high ionic conductivity at a low temperature. Therefore, it is possible to increase the durability of the solid oxide fuel cell by improving the stability of the cell.

Hereinafter, the present disclosure is described in further detail with reference to Examples, but these are only exemplary and the present disclosure is not limited to the following Examples.

### Example 1

A test cell 10 was manufactured. The test cell 10 includes an electrolyte layer 11, a pair of first functional layers 12 and a pair of cathode material layers 13 in the sequence the cathode material layer/first functional layer/electrolyte layer/first functional layer/cathode material layer.

### - Material for Electrolyte Layer 11

Scandia-stabilized zirconia ("ScSZ") of the formula Zr_{0.8}Sc_{0.2}O_{2-ξ}, wherein ξ is selected so that the zirconium-based metal oxide represented by the foregoing chemical formula is electrically neutral, (FCM, USA) was used as a material for the electrolyte layer 11.

### - Material for First Functional Layer 12

Gadolinium-doped ceria ("GDC") of the formula Ce_{0.9}Gd_{0.1}O_{2-η}, wherein η is selected so that the ceria-based metal oxide represented by the foregoing chemical formula is electrically neutral, (FCM, USA) was used as a material for the first functional layer 12.

### - Material for Cathode Material Layer 13

Ba_{0.5}Sr_{0.5}Co_{0.8}Fe_{0.1}Zn_{0.1}O_{3-δ} therein δ is selected so that the metal oxide represented by the foregoing chemical formula is electrically neutral, was manufactured according to the following method to use as a material for the cathode material layer 13.

First, a nitride of the each metal is weighed to provide an amount of each corresponding to a molar ratio of the foregoing composition and urea is weighed to have a molar ratio of (Ba+Sr) : urea = 1 : 3.5. The nitrides, the urea and PVA having the same weight as the urea are mixed together in about 200 milliliters (mL) of water, and then, stirred at about 150 °C for about 1.5 hours. Subsequently, the mixed solution is gelated by heating at about 200 °C for about 2.5 hours. A sintered powdered product is obtained by heat treating the obtained gelated material in an alumina crucible at about 900 °C for about 2 hours. The material for a cathode is manufactured by grinding the sintered powder thus obtained.

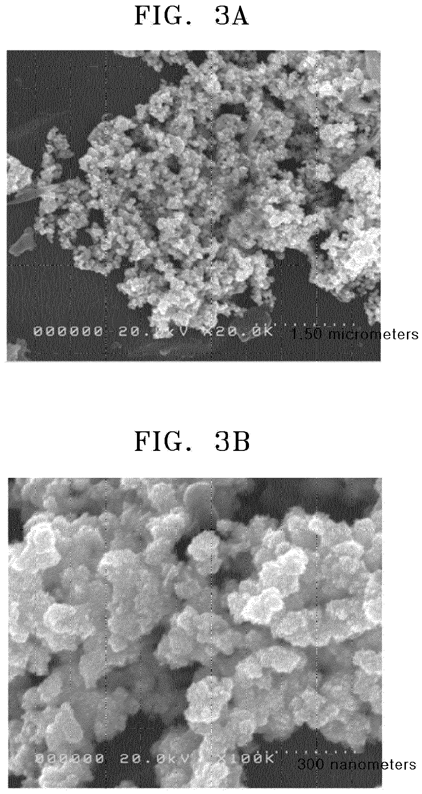

FIGS. 3A and 3B show scanning electron micrographs ("SEM"s) of the obtained powder material for a cathode. As illustrated in FIGS. 3A and 3B, it may be understood that the powder material for a cathode has a uniform particle size of about 100 nm or less.

### - Manufacture of Electrolyte Layer 11

About 1.5 g of the scandia-stabilized zirconia ("ScSZ") is weighed and put into a mold having a diameter of about 1 centimeter (cm), and uniaxially pressed at a pressure of about 200 megaPascals (MPa). Then, an electrolyte pellet is manufactured to provide the electrolyte layer 11 by sintering at a temperature of about 1550 °C for about 8 hours.

### - Manufacture of First Functional Layer 12

About 0.2 grams (g) of an organic vehicle (ink vehicle (VEH), FCM, USA) is added to about 0.3 g of the gadolinium-doped ceria ("GDC") and uniformly mixed to manufacture a slurry. Then the slurry is screen printed using a 40 µm screen on both sides of the sintered electrolyte pellet. Subsequently, the first functional layers 12 are formed on both sides of the electrolyte layer 11 by sintering at a temperature of about 1400 °C for about 5 hours.

### - Manufacture of Cathode material Layer 13

About 0.2 g of the organic vehicle (ink vehicle (VEH), FCM, USA) is added to about 0.3 g of the Ba_{0.5}Sr_{0.5}Co_{0.8}Fe_{0.1}Zn_{0.1}O_{3-δ} powder and uniformly mixed to manufacture a slurry, and then, the slurry is screen printed using a 40 µm screen on both surfaces of the first functional layers 12. Subsequently, the cathode material layers 13 are formed on the both surfaces of the first functional layers 12 by sintering at a temperature of about 900 °C for about 2 hours.

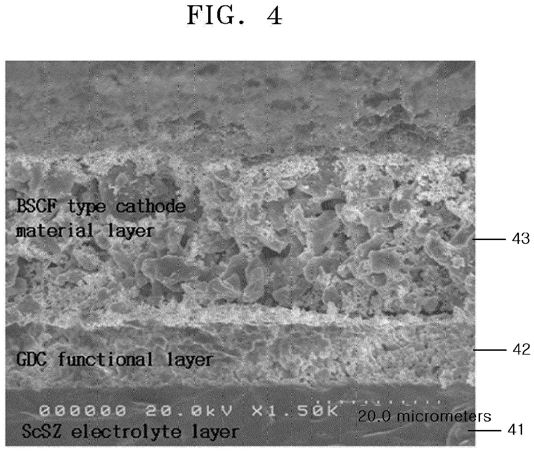

FIG. 4 shows a cross-sectional SEM image of the cathode material layer/first functional layer/electrolyte layer in a test cell including the cathode layer thus obtained. As illustrated in FIG. 4, it may be understood that the electrolyte layer 11 is formed in a high density, and the first functional layer 12 has a dense structure. Shown in Fig. 4 is a ScSZ electrolyte layer 41, a GDC functional layer 42, and a BSCF type cathode material layer 43.

### Examples 2 to 12

Except for manufacturing and using the compositions presented in Table 1 below instead of Ba₀.₅Sr₀.₅Co₀.₈Fe₀.₁Zn_{0.1}O_{3-δ} as the material for a cathode material layer in the Example 1, test cells are manufactured by performing the same processes as the Example 1.

### Comparative Example 1

Except for using Ba_{0 5}Sr_{0 5}Co_{0 8}Fe_{0 2}O_{3-δ} instead of Ba_{0 5}Sr_{0 5}Co_{0 8}Fe_{0 1}Zn_{0 1}O_{3-δ} in the Example 1, a test cell 10 is manufactured by performing the same processes as the Example 1.

### Evaluation Example 1: Thermal Expansion Coefficient Measurement Tests

Thermal expansion coefficients of the test cells 10 manufactured in the Examples 2 to 12 and the Comparative Example 1 were measured in an air environment, and results thereof were presented in Table 1 below. A DIL402PC dilatomer (NETZSCH Group) was used to measure the thermal expansion coefficients. Also, operating temperatures of the test cells 10 were maintained at about 600 °C.

**Table 1**

| Category | Composition | Dopant | Thermal expansion coefficient (×10⁻⁶K⁻¹) |
|---|---|---|---|
| Example 1 | Ba_{0.5}Sr_{0.5}Co_{0.8}Fe_{0.1}Zn_{0.1}O_{3-δ} | Zn | 17.10 |
| Example 2 | Ba_{0.5}Sr_{0.5}Co_{0.6}Fe_{0.2}Zn_{0.2}O_{3-δ} | Zn | 16.30 |
| Example 3 | Ba_{0.5}Sr_{0.5}Co_{0.8}Fe_{0.1}Mn_{0.1}O_{3-δ} | Mn | 16.88 |
| Example 4 | Ba_{0.5}Sr_{0.5}Co_{0.6}Fe_{0.2}Mn_{0.2}O_{3-δ} | Mn | 14.95 |
| Example 5 | Ba_{0.5}Sr_{0.5}Co_{0.8}Fe_{0.1}Mn_{0.1}O_{3-δ} | Nb | 16.87 |
| Example 6 | Ba_{0.5}Sr_{0.5}Co_{0.6}Fe_{0.2}Nb_{0.2}O_{3-δ} | Nb | 16.83 |
| Example 7 | Ba_{0.5}Sr_{0.5}Co_{0.8}Fe_{0.1}Yb_{0.2}O_{3-δ} | Yb | 16.99 |
| Example 8 | Ba_{0.5}Sr_{0.5}Co_{0.6}Fe_{0.2}Yb_{0.2}O_{3-δ} | Yb | 16.34 |
| Example 9 | Ba_{0.5}Sr_{0.5}Co_{0.8}Fe_{0.1}Cu_{0.1}O_{3-δ} | Cu | 19.50 |
| Example 10 | Ba_{0.5}Sr_{0.5}Co_{0.8}Fe_{0.1}Ni_{0.1}O_{3-δ} | Ni | 16.50 |
| Example 11 | Ba_{0.5}Sr_{0.5}Co_{0.8}Fe_{0.1}Ti_{0.1}O_{3-δ} | Ti | 16.31 |
| Example 12 | Ba_{0.5}Sr_{0.5}Co_{0.8}Fe_{0.1}Ho_{0.1}O_{3-δ} | Ho | 18.30 |
| Comparative Example 1 | Ba_{0.5}Sr_{0.5}Co_{0.8}Fe_{0.2}O_{3-δ} | - | 19.70 |

As shown in Table 1, lower thermal expansion coefficients were exhibited in the case of the test cells employing the cathode materials obtained in the Examples 1 to 12 in comparison to the Comparative Example 1.

### Evaluation Example 2: Ionic Resistance Measurement Tests in Air Environment

Impedances of the test cells 10 manufactured in the Examples 1, 2, 3, 5, 7, 8, and 9 and the Comparative Example 1 were measured in an air environment, and results thereof are presented in Table 2 below. A Materials Mates 7260 impedance meter (Materials Mates) was used as an impedance meter. Also, operating temperatures of the test cells 10 were maintained at about 600 °C.

**Table 2**

| Category | Composition | Dopant | Ionic resistance (Ω cm² @600 °C) | Thermal expansion coefficient (×10⁻⁶K⁻¹) |
|---|---|---|---|---|
| Example 1 | Ba_{0.5}Sr_{0.5}Co_{0.8}Fe_{0.1}Zn_{0.1}O_{3-δ} | Zn | 0.21 | 17.10 |
| Example 2 | Ba_{0.5}Sr_{0.5}Co_{0.6}Fe_{0.2}Zn_{0.2}O_{3-δ} | Zn | 0.24 | 16.30 |
| Example 3 | Ba_{0.5}Sr_{0.5}Co_{0.8}Fe_{0.1}Mn_{0.1}O_{3-δ} | Mn | 0.27 | 16.88 |
| Example 5 | Ba_{0.5}Sr_{0.5}Co_{0.8}Fe_{0.1}Nb_{0.1}O_{3-δ} | Nb | 0.23 | 16.87 |
| Example 7 | Ba_{0.5}Sr_{0.5}Co_{0.8}Fe_{0.1}Yb_{0.1}O_{3-δ} | Yb | 0.19 | 16.99 |
| Example 8 | Ba_{0.5}Sr_{0.5}Co_{0.6}Fe_{0.2}Yb_{0.2}O_{3-δ} | Yb | 0.23 | 16.34 |
| Example 9 | Ba_{0.5}Sr_{0.5}Co_{0.8}Fe_{0.1}Cu_{0.1}O_{3-δ} | Cu | 0.17 | 19.50 |
| Comparative Example 1 | Ba_{0.5}Sr_{0.5}Co_{0.8}Fe_{0.2}O_{3-δ} | - | 0.20 | 19.70 |

As shown in Table 2, the test cells employing the cathode materials obtained in the Examples 1, 2, 3, 5, 7, 8, and 9 exhibited lower or similar resistance at low temperatures, i.e., higher or similar ionic conductivities as well as maintaining lower thermal expansion coefficients in comparison to Comparative Example 1.

According to an embodiment, a material for a solid oxide fuel cell having improved thermal expansion properties and providing a low resistance at low temperatures may be provided by doping a transition metal element and/or a lanthanide element into a perovskite-type oxide.

According to another embodiment, a cathode for a solid oxide fuel cell including the material may be provided.

According to another embodiment, a solid oxide fuel cell having improved electrical performance by including the material may be provided.

While the present invention has been particularly shown and described with reference to exemplary embodiments thereof, it will be understood by those of ordinary skill in the art that various changes in form and details may be made therein without departing from the scope as defined by the following claims.

## Claims

1. A material for a solid oxide fuel cell comprising a compound of Chemical Formula 1:
Chemical Formula 1 BaₐSr_{b}CoₓFe_{y}M_{1-x-y}O_{3-δ}
wherein
M represents at least one of a transition metal element or a lanthanide element,
a and b are in a range of 0.4 ≤ a ≤ 0.6 and 0.4 ≤ b ≤ 0.6, respectively,
x and y are in a range of 0.6 ≤ x ≤ 0.9, 0.1 ≤ y ≤ 0.4 and x+y < 1, respectively, and
δ is selected so that the compound of Chemical Formula 1 is electrically neutral.

2. The material for a solid oxide fuel cell of claim 1, wherein a=0.5 and b=0.5, and wherein x and y are in a range of 0.75 ≤ x ≤ 0.85 0.1 ≤ y ≤ 0.15 and x+y < 1, respectively.

3. The material for a solid oxide fuel cell of claim 1, wherein the compound of Chemical Formula 1 is a compound of Chemical Formula 3:
Chemical Formula 3 Ba_{0.5}Sr_{0.5}Co_{0.8}Fe_{0.1}M_{0.1}O_{3-δ}

4. The material for a solid oxide fuel cell of claim 1, wherein x and y are in a range of 0.7 ≤ x+y ≤ 0.95.

5. The material for a solid oxide fuel cell of claim 1, wherein a and b are in a range of0.9 ≤ a+b ≤ 1.

6. The material for a solid oxide fuel cell of any of claims 1-5, wherein the transition metal is at least one of manganese, zinc, nickel, titanium, niobium, or copper.

7. The material for a solid oxide fuel cell of any of claims 1-6, wherein the lanthanide element is at least one of holmium, ytterbium, erbium, or thulium.

8. The material for a solid oxide fuel cell of any of claims 1-5, wherein M represents at least one of zinc, niobium and ytterbium.

9. A cathode for a solid oxide fuel cell, the cathode comprising the material for a solid oxide fuel cell according to any of claims 1-8.

10. The cathode for a solid oxide fuel cell of claim 9, wherein the cathode has a multilayer structure comprising the material for a solid oxide fuel cell and an additional layer,
the additional layer comprising a lanthanide metal oxide having a perovskite crystal structure.

11. A solid oxide fuel cell comprising:
the cathode according to claim 9 or 10;
an anode; and
an electrolyte disposed between the cathode and the anode.

12. The solid oxide fuel cell of claim 11, further comprising a first functional layer which is disposed between the cathode and the electrolyte and which is effective to prevent or suppress a reaction between the cathode and the electrolyte.

13. The solid oxide fuel cell of claim 12, wherein the first functional layer includes at least one of gadolinium-doped ceria, samarium-doped ceria, or yttrium-doped ceria.

14. A solid oxide fuel cell comprising:
a cathode;
an anode;
an electrolyte disposed between the cathode and the anode; and
a second functional layer disposed between the cathode and the electrolyte and
including the material for a solid oxide fuel cell according to any of claims 1-8.

15. The solid oxide fuel cell of any of claims 11-14, wherein an operating temperature of the solid oxide fuel cell is about 800 °C or less.
